# EUROPEAN PATENT APPLICATION

(11) **EP 4 400 359 A1**
(43) Date of publication of application: **17.07.2024**
(21) Application number: 23151585.9
(22) Date of filing: 13.01.2023
(51) Int. Cl.: B60L 53/16, H01R 11/00

(54) **ELECTRICAL CONNECTION SYSTEM FOR CHARGING VEHICLES**

(71) Applicant: Aptiv Technologies AG, 8200 Schaffhausen (CH)
(72) Inventor: OEKEN, Andre, 40627 Düsseldorf (DE); HERMES, Dominik, 33739 Bielefeld (DE); RAMAEKERS, Udo, 58332 Schwelm (DE); PERUMALSAMY, Vijendran, 639201 Karur (IN)
(74) Representative: Bardehle Pagenberg Partnerschaft mbB Patentanwälte Rechtsanwälte

(57) **Abstract**

The present invention relates to an electrical connection system for charging a battery of a vehicle, the system comprising: a core element having a charging plug side for receiving a charging plug and an inner side substantially opposite the charging plug side, the core element comprising a first current section with a housing; and an interface module mountable to the inner side of the core element for electrically engaging with the first current section, wherein the interface module is configured to establish an electrical connection between one or more inner vehicle terminals and the first current section.

## Description

### 1. Field of the invention

The present invention relates to an electrical connection system for charging a battery of a vehicle. Particularly the present invention relates to an electrical connection system comprising a core element and an interface module that facilitates establishing an electrical connection between a plurality of different vehicle terminals and the core element. The present invention further relates to a set comprising the electrical connection system and a respective use.

### 2. Background

In recent years the automotive sector has been facing a shift towards electric vehicles, which are becoming more and more important and popular among consumers. This shift, in turn, is accompanied by a growing demand of electrical parts and components. Among this are charging inlets for charging a battery of an electrical vehicle. Different charging systems are used around the globe depending on the territory. A standardization process provided for a Combined Charging System (CCS) that facilitates standardized charging of electric vehicles.

The Combined Charging System comprises an alternating current (AC) section and a direct current (DC) section in the charging inlet of the vehicle. When charging of the vehicle's battery is to be performed, a charging plug is connected by a consumer to a respective inlet of the CCS at the vehicle. Electrical power is transmitted from a power source via the inlet of the CCS to the vehicle's battery. At the inner side of the CCS conductors of the vehicle are electrically connected via vehicle terminals to the CCS.

The present situation of such an electrical connection, in particular the electrical connection from the AC/DC current sections to the conductors of the vehicle, reveals several drawbacks.

For instance, different sizes of conductors of the vehicle require a correspondingly adjusted current section of the CCS. Further, cooling requirements and thermal management of the conductors of the vehicle may vary, depending on the different charging currents that are to be supported. This leads to different designs of the conductors and terminals of the vehicle, which makes adjustments to the current section of the CCS necessary. Further examples that require adjustments to the current section of the CCS at the inner vehicle side are different shapes of the conductors, different materials of the conductors, usage of shielded or unshielded conductors and varying outlet directions of the conductors that are connected to the CCS.

Overall, this leads to cumbersome adaptions to the current section of the CCS, which significantly increases manufacturers' costs. Moreover, since further advances in the field of electric vehicles is likely, such cumbersome adaptions are expected to grow.

Against this background, there is a need to improve charging systems of electrical vehicles, as the present situation fails to address manufacturers' needs.

It is thus an object of the present invention to overcome some or all of the deficiencies of the prior art. In particular, it is an object of the invention to provide for an electrical connection system that allows to easily adapt to different terminals, which are to be connected to an electrical current section. Thus, costs should be reduced, and flexibility should be increased.

### 3. Summary

The above-mentioned objects are at least partially achieved by the subject-matter of the independent claims. Preferred embodiments are subject of the dependent claims, and the skilled person finds hints for other suitable aspects of the present invention through the overall disclosure of the present application.

An aspect of the invention relates to an electrical connection system for charging a battery of a vehicle, the system comprising: a core element having a charging plug side for receiving a charging plug and an inner side substantially opposite the charging plug side, the core element comprising a first current section with a housing; and an interface module mountable to the inner side of the core element for electrically engaging with the first current section, wherein the interface module is configured to establish an electrical connection between one or more inner vehicle terminals and the first current section.

In this manner, the present disclosure provides an electrical connection system, which has the advantage that one or more inner vehicle terminals can be electrically connected to the first current section in a simplified manner. For instance, if an inner vehicle terminal of a different arrangement and/or configuration is to be electrically connected to the first current section, this is facilitated by the interface module.

Furthermore, the electrical connection system has the advantage that it is not required to adapt the first current section, the housing of the first current section and/or the core element. Thus, the same core element can be used for different inner vehicle terminals. This reduces costs, as the first current section does not need to be changed and/or revalidated. Particularly, stringent requirements imposed in the automotive sector may entail that such revalidation becomes necessary in case the first current section is modified. Thus, the inventors found a way to alleviate this burden. This ensures an improved service, particularly in the automotive sector.

The core element may be part of a charging socking inlet, for instance a charging socking inlet of an electrical vehicle. In one example, a user may connect a charging plug to the charging plug side of the core element. In this manner, the charging plug side may be directed to the outside of the car. Further, the inner side of the core element may be directed to the inside of the car.

The first current section may be a direct current section (DC) and/or an alternate current (AC) section, preferably a DC section.

The interface module is mountable to the inner side of the core element. This may be understood in such a manner that the interface module may be fastened to the inner side of the core element. It may be possible that the interface module is also at least partially mountable to at least part of the housing of the first current section.

It is understood by the term "mountable" that the interface module is not necessarily required to be mounted to the inner side of the core element. It is advantages that the interface module can be mounted to the first current section. Thereby, the interface module can be easily removed, in one example.

When reference is made herein to "different" inner vehicle terminals, this may be understood as different cables, conductors, busbars or the like that could be used in a vehicle or that may be part of a vehicle. Particularly, the difference could be based on different sizes of the cables (also termed conductors herein) (e.g. different cross-sections and/or different cross-sectional areas), different shapes (e.g. a round or a flat shape), different configuration (e.g. shielded or unshielded, cooling or no cooling), different amount of current being transmitted, and/or different outlet directions (e.g. the cables may be arranged so as to form an angle of 90°, 180° or 270° with respect to a mounting direction to the interface module and the inner side of the core element). As regards cooling or no cooling, this may be understood as cooling or no cooling of the terminals and/or cables, conductors, busbars.

In a preferred embodiment, the interface module has one or more outer interface terminals facing the first current section of the core element when mounted and one or more inner interface sockets for receiving one or more inner vehicle terminals.

This has the advantage that the outer interface terminals can facilitate to establish the electrical connection to the first current section. Moreover, the inner interface sockets facilitate that inner vehicle terminals can be received. This provides an improved electrical connection.

It may be possible that the one or more inner interface sockets are facing away from the inner side of the core element when the interface module is mounted to the first current section. Thereby, the one or more inner interface sockets may be also facing away from the first current section of the core element when the interface module is mounted to the first current section. It may be possible that the interface module has at least two sides, one side of which (having the outer interface terminals) may be facing the first current section of the core element and the other side (having the inner interface sockets) of the interface module may be substantially opposite, e.g. facing to an interior of a vehicle, when mounted.

Preferably, the interface module has two outer interface terminals. Further preferably, the interface module has two inner interface sockets.

The interface sockets may be understood as comprising a combination of electrically conductive material, which is at least partially surrounded by electrically non-conductive material. This aids in establishing an electrical connection.

Preferably, the one or more outer interface terminals are configured to engage with the first current section and to protrude at least partially into one or more corresponding recesses of the first current section.

This has the advantage that an improved electrical connection may be established. It may be possible that the above-described protrusion aids in ensure an improved fitting and mounting. In one example, the protrusion into the recesses may provide a positive locking fit. Thus, the interface module may be mounted more reliably.

Preferably, the one or more inner interface sockets are protruding in an opposite direction than the one or more outer interface terminals by a length of at most 80%, preferably at most 70%, more preferably at most 60%, more preferably at most 50%, more preferably at most 40%, more preferably at most 35%, more preferably at most 30%, more preferably at most 25%, most preferably at most 20% of the length of the one or more outer interface terminals.

This has the advantage that the one or more inner interface sockets do not protrude to such a great extent compared to the one or more outer interface terminals. The one or more inner interface sockets should only be sufficiently long such that inner vehicle terminals may be easily connected to them for establishing an electrical connection.

It is beneficial that the one or more outer interface terminals protrude to a greater extent such that they can engage more easily with recesses of the first current section.

The protrusion direction of the interface sockets and the interface terminals may be best understood with regard to a mounting direction of the interface module, e.g. the protrusion directions are substantially parallel to the mounting direction.

Further, the protrusion direction of the interface sockets is substantially opposite to the one of the interface terminals.

Preferably, the one or more outer interface terminals and/or the one or more inner interface sockets have a substantially circular shape.

This has the advantage that the one or more outer interface terminals can engage more easily with the recesses of the first current section. This improves mounting, and aids in maintaining a predefined position of the interface module. Further, terminals can be connected to the inner interface sockets more easily by way of the circular shape.

In a preferred embodiment, the interface module comprises a fitting part for engaging with the housing of the first current section. Optionally, the housing defines an opening, and wherein the fitting part at least partially extends into the opening and preferably contacts at least partially an inner circumference of the opening when mounted.

This has the advantage that the interface module can be mounted more easily to the inner side of the core element. Further, the fitting part aids in keeping a predetermined mounting position. The fitting part may be configured such that it mates with the opening of the housing of the first current section.

In one example, the fitting part may seamlessly engage with the housing of the first current section.

It may be possible that the fitting part comprises a plurality, preferably four, six or eight, substantially rounded corners along its periphery, substantially contacting the inner circumference of the opening, when mounted. It may also be possible that a sealing member is arranged between the fitting part and the opening when mounted. This aids mounting and reduces damage to a material of the core element and/or the interface module. Further, this may prevent water and/or dust from entering from the exterior.

Preferably, the fitting part has a thickness in a mounting direction of the interface module of at most 40%, preferably at most 20%, more preferably at most 15%, most preferably at most 10% of its width or height perpendicular to the thickness.

This ensures that an optimum thickness of the fitting part is achieved. On the one hand, the thickness should not be too large, as this adversely affects waste of material. On the other hand, the thickness should not be too small, as this compromises mounting and fitting of the interface module. Thus, the inventors found that an optimum balance should be struck.

In a preferred embodiment, the interface module comprises a plurality of locking members arranged on a periphery of the interface module for engaging with corresponding latching members of a terminal housing of the one or more inner vehicle terminals.

This has the advantage that the interface module facilitates a mechanical connection to the terminal housing. Further, a connection by way of latching members may be a mature technology and thus well accepted by personnel in the assembling process.

Exemplarily, the locking members may each comprise a protrusion and the latching members may each comprise a recess, which can get in communication with the protrusions for establishing a mechanical connection.

The terminal housing may be understood as a casing that substantially surrounds the one or more inner vehicle terminals. Further, vehicle conductors may protrude into said housing and may have said inner vehicle terminals at their respective endings in the terminal housing.

In a preferred embodiment, the interface module comprises a plurality of slits for receiving corresponding ribs comprised by the first current section when mounted.

This has the advantage that the interface module can be mounted to the inner side of the core element in an improved manner. The slits and the corresponding ribs may aid in preventing lateral movement of the interface module.

In a preferred embodiment, the interface module is mountable to the housing of the first current section via fastening means, such as a screw, preferably extending through a mounting hole arranged on the interface module the between two outer interface terminals and between two inner interface sockets when mounted.

Accordingly, mounting of the interface module is improved. The interface module may be easily assembled and disassembled. Preferably, the interface module comprises two inner interface sockets and two outer interface terminals. The arrangement of the mounting hole between each of the two sockets and terminals aids in centralizing the mounting point and the distribution of the mechanical load.

The skilled person understands that, in case a different number of inner interface sockets and outer interface terminals is comprised by the interface module, the mounting hole may be arranged at a different location.

Preferably, the first current section is a direct current (DC) section, which is optionally configured to provide an electrical current of at least 300 A, preferably at least 400 A, more preferably at least 500 A, more preferably at least 600 A, more preferably at least 650 A, more preferably at least 800 A, more preferably at least 900 A, most preferably at least 1000 A.

This has the advantage that an increased charging power can be provided. Recharging a battery is thus accelerated. This is appreciated by users as the waiting time for recharging can be reduced. DC transmission is beneficial as it requires less conductor material compared to AC transmission. This may be understood as only two wires are required for transmission of through DC system. Further, as understood by the skilled person, a DC transmission may have an improved voltage regulation compared an AC transmission line.

In a preferred embodiment, the core element further comprises an alternating current (AC) section, wherein the core element is part of a combined charging system (CCS), such as a CCS1 or CCS2, wherein the electrical connection system is configured to provide charging power of at least 100 kW, preferably at least 200 kW, more preferably at least 300 kW, most preferably at least 350 kW. Moreover, the charging power may be higher, e.g. at least 500 kW, 700 kW, 1000 kW or 1500 kW, depending on the configurations of the CCS. For instance, DC charging with 1500 V and 1000 A results in a charging power of 1.5 MW.

This has the advantage that the electrical connection system provides for AC as well as DC charging in a combined manner. For instance, AC may be the most common charging method for electric vehicles and most chargers may use AC power. Thereby, a plurality of charging stations may be used for charging.

Further, the combined charging system 1, i.e. CCS1 allows for 1-phase AC charging, which may be appreciated by consumers in some areas around the globe. The combined charging system 2, i.e. CCS2 allows for 3-phase AC charging, which may be appreciated by consumers in the same or preferably other areas around the globe.

It may be possible that the DC and/or AC sections are configured to facilitate a high-voltage electrical connection. In this manner, the DC and/or AC sections may be configured to facilitate high voltage charging of the battery, such as the battery of a vehicle.

A further aspect is related to a set comprising the electrical connection system as described herein, wherein the set is further comprising: at least one further interface module; wherein the sides of the interface module and of the further interface module facing the first current section when mounted are substantially the same and wherein the respective opposite sides of the interface module and of the further interface module are different, so as to allow to establish an electrical connection between at least two different inner vehicle terminals and the first current section.

The set comprises all advantages of the electrical connection system described herein. Particularly, it is noted that the set as described herein may include all aspects and/or embodiments described herein, even if not expressly described as a set but rather with reference to the electrical connection system. It is also to be understood that the features and advantages described with reference to the electrical connection system may equally be applicable to the set as described herein.

The "sides" of the interface module and of the further interface module means one side of each interface module. Thus, in one example, the "sides" are two sides. It is understood that merely one interface module is mounted at the same time to the inner side of the core element for electrically engaging with the first current section. Thereby, merely one interface module establishes an electrical connection between one or more inner vehicle terminals and the first current section at the same time. The interface module and the further interface module may be easily exchanged so as to establish a respective electrical connection. This has the advantage that the core element does not need to be altered/adapted in case different inner vehicle terminals are to be electrically connected to the core element.

It is noted that when reference is made herein to "substantially the same" sides, manufacturing tolerances usually have to be taken into consideration, which is expressed by the term "substantially". The sides may not necessarily be the same at the microscopic level. For instance, minor deviations of the sides may pertain that could be attributable to manufacturing tolerances, aging effects, other minor defects or the like. However, the skilled person would readily recognize that the respective sides of the interface module and of the further interface module are the same, although minor or negligible deviations pertain.

The respective opposite sides of the interface module and the further interface module may be the sides that are facing away from the inner side of the core element when mounted. It is advantageous that the respective opposite sides are configured so as to facilitate an electrical connection to at least two different inner vehicle terminals and the inner interface sockets.

In one example, this may be understood such that, two inner vehicle terminals that facilitate transmission of, e.g. 500 A electrical current, wherein the conductors have a circular cross-section can be connected to the two inner interface sockets of the interface module. Two further different inner vehicle terminals (e.g. that facilitate transmission of 1000 A electrical current, wherein the conductors have a rectangular cross-section) can be connected to the two inner interface sockets of the further interface module. This example merely serves the purpose to support the understanding of the "different" inner vehicle terminals.

By way of the set as described herein, the electrical connection to different inner vehicle terminals is flexible, as the present disclosure allows for different materials to be used as conductors, the shape of the conductors could vary (e.g. they could be round or flat), the conductors could be shielded or unshielded, the cross-sections of the conductors could vary, and/or the outlet direction of the conductors could vary. It is advantageous that these variations do not require adjustments of the first current section, as the interface module and the further interface module compensates for this.

It is understood that the set may comprise a plurality of interface modules. The plurality of interface modules have sides facing the first current section when mounted, wherein these sides are substantially the same. Further, the respective opposite sides are different.

Preferably, in the set as described herein, the one or more outer interface terminals of the interface module and of the further interface module are substantially the same and wherein the fitting part of the interface module and of the further interface module are substantially the same, wherein the one or more inner interface sockets of the interface module and of the further interface module are different in one or more of the following: a shape, such as a diameter, an arrangement, a protrusion length, mounting means for electrically connecting to respective inner vehicle terminals.

This has the advantage that an electrical connection can be easily established even if inner vehicle terminals are different. In such a case, merely the sides of the interface modules (as described herein, there may be three, four, five six or even more interface modules, e.g. a plurality of interface modules) facing away from the inner side of the core element when mounted are adapted to correspond to the requirements posed by the inner vehicle terminals.

The mounting means for electrically connecting to respective inner vehicle terminals may, in one example, be mounting holes comprised by each inner interface sockets of the interface module, and corresponding fastening means for electrically connecting the respective inner vehicle terminals to the interface sockets. Such mounting holes may be aligned substantially perpendicularly with respect to the protrusion direction of the interface sockets. In a further example, the mounting holes may be aligned substantially collinearly with respect to the protrusion direction of the interface sockets. The mounting holes may extend at least partially through the interface sockets.

A further aspect is related to a use of the set, as described herein, for connecting at least two different inner vehicle terminals to the first current section, wherein, preferably, the inner vehicle terminals are different in one or more of the following: a shape, a size, a cross-section, an amount of current being transmitted and/or a configuration, such as shielding or cooling.

It is noted that the features, aspects, embodiments and/or advantages as described herein with reference to the electrical connection system may likewise be applicable to the set and to the use of the set, even if not expressly described as such but rather with reference to features, aspects, embodiments and/or advantages of the electrical connection system.

Preferably, in the electrical connection system as described herein, the one or more inner vehicle terminals are not directly mountable to the first current section.

### 4. Brief description of the figures

In the following, preferred embodiments of the disclosure are disclosed by reference to the accompanying figures.
- Fig. 1:: illustrates a general arrangement of an electrical vehicle for being charged with electrical power.
- Fig. 2:: illustrates an overview of an exemplary electrical connection system according to an embodiment of the invention in two different arrangements.
- Fig. 3:: illustrates an electrical connection system according to an embodiment of the invention during the assembly process.
- Fig. 4:: illustrates an interface module according to an embodiment of the invention in two different perspectives.
- Fig. 5:: illustrates the connection concept of different inner vehicle terminals, respective housings and conductors via interface modules to the core element according to electrical connection systems of embodiments of the invention when not mounted.
- Fig. 6:: illustrates several electrical connection systems of Fig. 5, when mounted.
- Fig. 7:: illustrates inner vehicle terminals, a respective housing and conductors, in an explosion view.
- Fig. 8:: illustrates an electrical connection system according to an embodiment of the invention.
- Fig. 9:: illustrates interface modules according to several embodiments of the invention, which are part of a set of an embodiment of the invention.
- Fig. 10:: illustrates an electrical connection system according to an embodiment of the invention in different assembly steps.

### 5. Detailed description of the figures

### Definitions

The term "and/or" is only an association relationship describing associated objects and represents that three relationships may exist. For example, A and/or B may represent three conditions: i.e., independent existence of A, existence of both A and B and independent existence of B. In addition, the character "/" in the disclosure usually represents that previous and next associated objects form an "or" relationship.

The term "DC" refers to direct current.

The term "AC" refers to alternating current.

The term "CCS" refers to combined charging system.

The unit "A" as used herein refers to the unit of the electric current in the International System of Units (SI), i.e. ampere. E.g. 300 A refers to 300 ampere.

The unit "kW" as used herein refers to the unit of power, such as the electrical power in the International System of Units (SI).

### Embodiments shown in the figures

In the subsequent passages, the invention is described with reference to the accompanying figures in more detail. It is noted that further embodiments are certainly possible, and the below explanations are provided by way of example only, without limitation. Throughout the present figures and specification, the same reference numerals refer to the same elements. The figures may not be to scale, and the relative size, proportions, and depiction of elements in the figures may be exaggerated for clarity, illustration, and convenience.

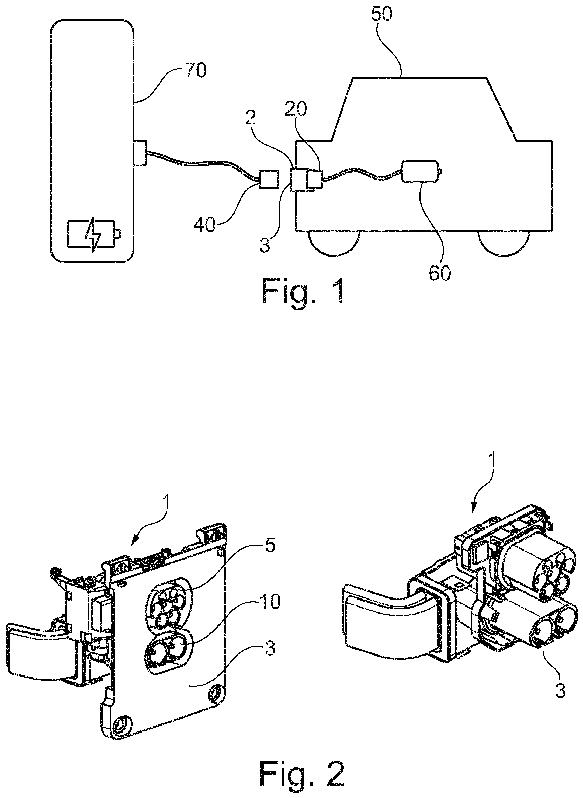

**Fig. 1** shows a general arrangement of an electrical vehicle 50, whose batter 60 can be charged with electrical power from a power source 70. A charging plug 40 can be electrically connected to the charging plug side 3 of a core element 2 of a charging system. The charging plug side 3 of a core element 2 is directed to the outside of the vehicle 50.

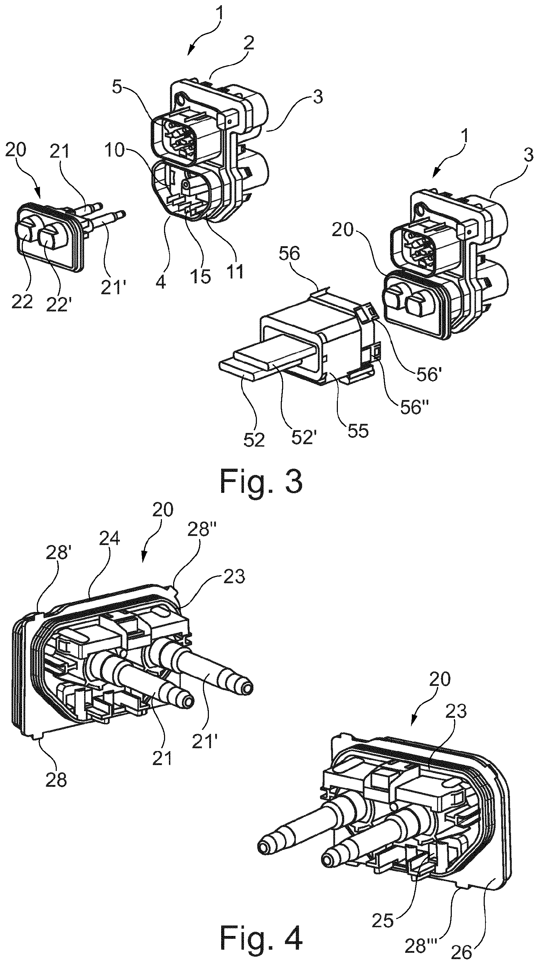

The core element 2 may be part of a CCS1, CCS2 or the like. Opposite to the charging plug side 3 is the inner side 4 (as can be seen in Fig. 3) of the core element 2 and an interface module 20 is mountable to the inner side 4 of the core element 2 for electrically engaging with the first current section 10 (as can be seen in Fig. 3) of the core element 2. In Fig. 1, the interface module 20 is already mounted to the inner side 4 of the core element 2.

**Fig. 2** shows an overview of an exemplary electrical connection system 1 according to an embodiment of the invention in two different arrangements. The charging plug side 3 can be mainly seen in Fig. 2. In the left drawing of Fig. 2, a mounting plate (no reference sign) is shown that surrounds the first current (preferably a DC) section 5 and the further current (preferably an AC) section 10. The mounting plate aids in mounting the core element 2 to the vehicle 50. In the right drawing of Fig. 2, the mounting plate is not shown.

**Fig. 3** shows an electrical connection system 1 according to an embodiment of the invention during the assembly process.

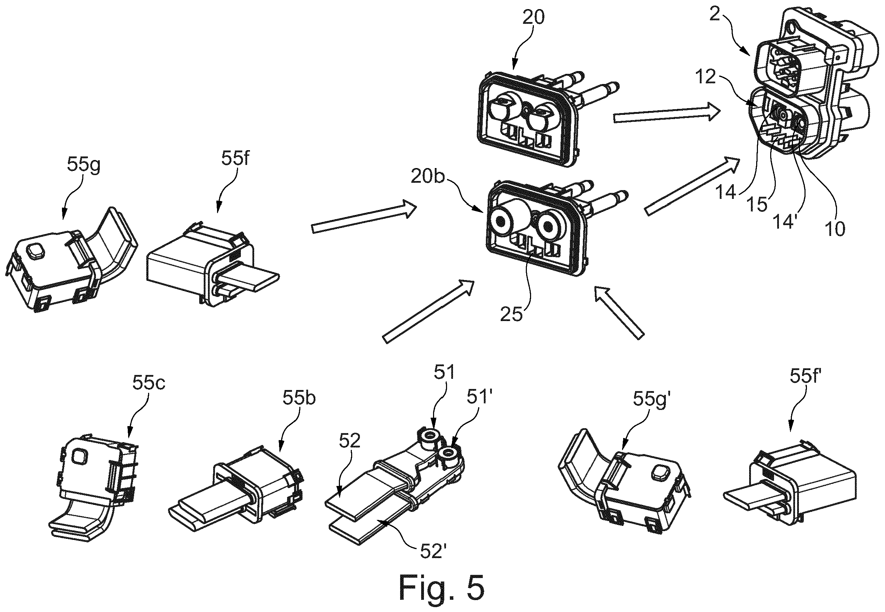

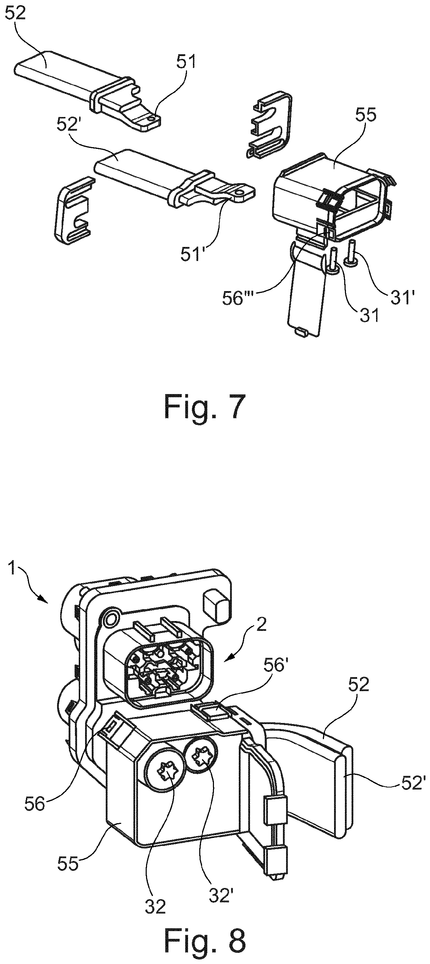

The left drawing of Fig. 3 shows that the interface module 20 has one or more (in this case two) outer interface terminals 21, 21' facing the first current section 10 of the core element 2 when mounted. Further, the interface module 20 has one or more (in this case two) inner interface sockets 22, 22' for receiving one or more inner vehicle terminals 51, 51' (as best seen in Figs. 7). The two outer interface terminals 21, 21' and the two inner interface sockets 22, 22' have a substantially circular (e.g. cylindrical) shape. The two outer interface terminals 21, 21' are configured to engage with the first current section 10 and to protrude at least partially into one or more corresponding recesses 14, 14' (as best seen in Fig. 5) of the first current section 10.

The right drawing of Fig. 3 shows an assembly step in which the interface module 20 is mounted to the inner side 4 of the core element 2, e.g. to the first current section 10. Further, a terminal housing 55 for housing inner vehicle terminals 51, 51' (as can be seen in Figs. 7 and 8) and conductors 52, 52' are shown, before mounted to the interface module 20.

**Fig. 4** shows an interface module 20 according to an embodiment of the invention in two different perspectives. The interface module 20 comprises a plurality (in this case four) of locking members 28, 28', 28", 28‴, arranged on a periphery 24 of the interface module 20 for engaging with corresponding latching members 56 of the terminal housing 55 of the one or more inner vehicle terminals 51, 51' (as can be seen in Figs. 3, 7 and 8).

Further still, the interface module 20 comprises a plurality of slits 25 for receiving corresponding ribs 15 (as can be seen in Fig. 5) when the interface module 20 is mounted to the first current section 10. The ribs 15 are comprised by the first current section 10. Moreover, the interface module 20 comprises a substantially flat main part 26, covering substantially an opening 12 (the opening 12 is indicated in Fig. 5) of the housing 11 of the first current section 10 on the inner side 4 of the core element 2 when mounted.

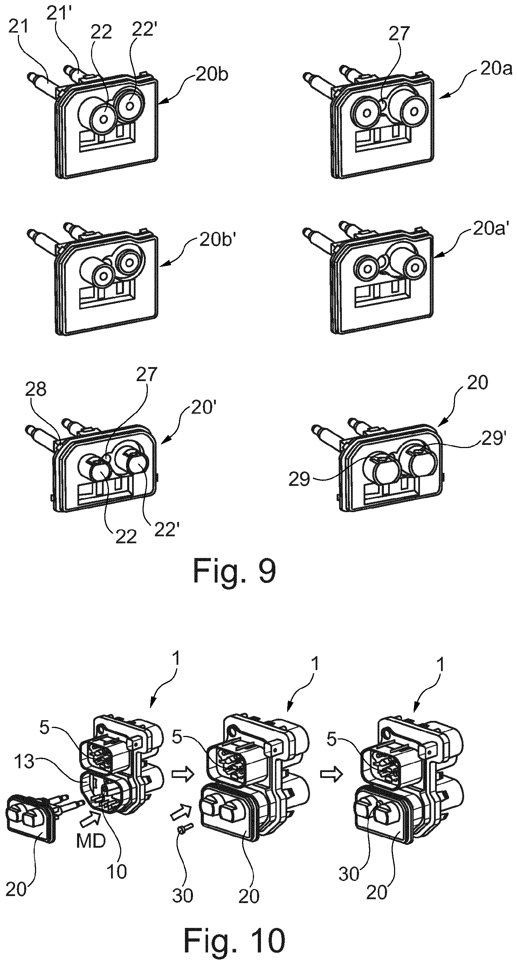

It can be seen that the fitting part 23 has a thickness in a mounting direction MD (as best seen in Fig. 10) of the interface module 20 of at most 40%, preferably at most 20%, more preferably at most 15%, most preferably at most 10% of its width or height perpendicular to the thickness.

**Fig. 5** shows the connection concept of different inner vehicle terminals 51, 51', respective housings 55 and conductors 52, 52' via interface modules 20, 20b to the core element 2 according to electrical connection systems 1 of embodiments of the invention when not mounted.

The inner vehicle terminals 51, 51' to be connected via the interface module 20 to the first current section 10 can be different. The core element 2 does not need to be adapted in order to provide an electrical connection, which is advantageous. The inner vehicle terminals 51, 51' can be different in one or more of the following: a shape, a size, a cross-section, an amount of current being transmitted and/or a configuration, such as shielding or cooling. In particular, also different conductors 52, 52' can be easily electrically connected. In Fig. 5 different inner vehicle terminals with housings 55 are shown. In one example, the conductors 52, 52' have a 200 mm² flat cross section with a 90° outlet direction angle (indicated by housings 55f and 55g). In another example, the conductors 52, 52' have a 200 mm² flat cross section with a 180° outlet direction angle (indicated by housings 55b and 55c). In a further example, the conductors 52, 52' have a 200 mm² flat cross section with a 270° outlet direction angle (indicated by housings 55g' and 55f').

The different configurations of the inner vehicle terminals and/or the conductors 52, 52' can be easily connected by way of the interface modules 20, 20b to the first current section 10 of the core element 2.

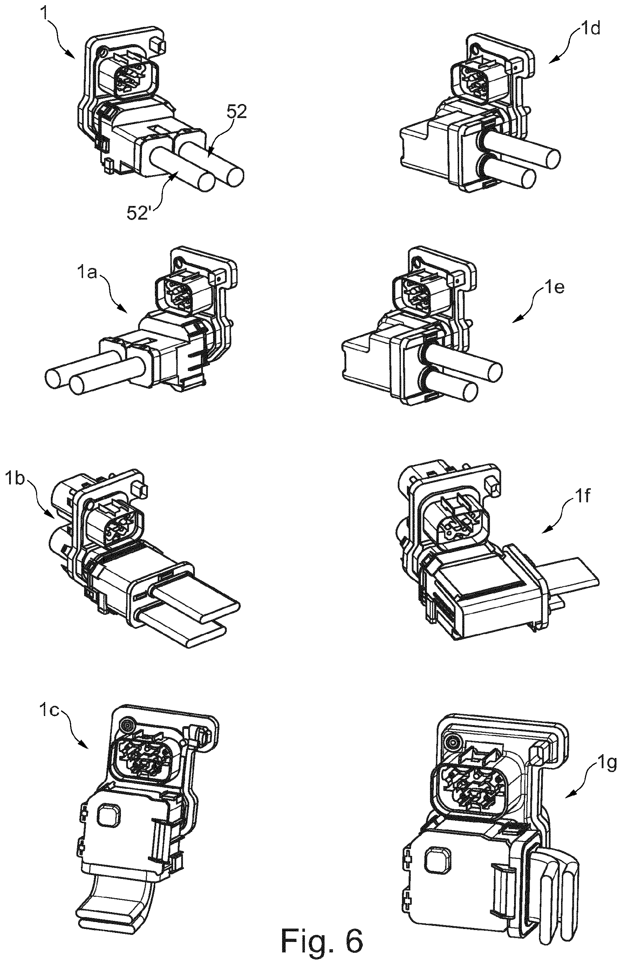

**Fig. 6** shows several electrical connection systems of Fig. 5, when mounted. In the left column of Fig. 6, electrical connection systems with a 180° outlet direction angle of conductors 52, 52' (for the sake of brevity, merely two conductors are indicated in Fig. 6) are indicated as 1, 1a, 1b, 1c. Further, in the right column of Fig. 6, electrical connection systems with a 90° outlet direction angle are indicated as 1d, 1e, 1f, 1g. Further still, in the electrical connection systems 1, 1a, 1d and 1e, the conductors have a rounded/circular shape. The cross-sections of the conductors in the electrical connection systems 1 and 1d are greater than in the electrical connection systems 1a and 1e so as to allow for a greater power to be transmitted. It is advantageous that in all embodiments shown, the core element is always the same and does not need to be adapted.

**Fig. 7** shows inner vehicle terminals 51, 51', a respective housing 55 and conductors 52, 52', in an explosion view. Fastening means, e.g. screws 31, 31' are protruding respective mounting holes 29, 29' (as indicated in the lower right drawing of Fig. 9) of the two inner interface sockets 22, 22' for electrically connecting the inner vehicle terminals 51, 51' to the inner interface sockets 22, 22'. In this manner, the screws 31, 31' can be easily provided for instance from the bottom as shown in Fig. 7 so as to aid in establishing an electrical connection.

**Fig. 8** shows an electrical connection system according to an embodiment of the invention. The electrical connection system in Fig. 8 is already assembled. A mounting cover is opened at the back side facing away from the inner side 4 of the core element 2 such that screws 32, 32' from the back for the inner interface sockets 22, 22' are easily accessible. The screws 32, 32' aid in establishing an electrical connection.

This is a different embodiment compared to Fig. 7, since in Fig. 8, the conductors 52, 52' have an outlet angle of 90° (and screws 32, 32' are provided from the back), wherein in Fig. 7, the outlet angle of the conductors 52, 52' is 180° (and screws 31, 31' are provided from the bottom).

**Fig. 9** shows (further) interface modules 20, 20', 20a, 20a', 20b, 20b' (for the same of brevity, not all reference signs are necessarily noted herein) according to several embodiments of the invention, which are part of a set of an embodiment of the invention.

It can be seen that the one or more inner interface sockets 22, 22' of all embodiments of the interface modules are protruding in an opposite direction than the one or more outer interface terminals 21, 21' by a length of at most 50%, preferably at most 40%, more preferably at most 30%, more preferably at most 35%, more preferably at most 30%, most preferably at most 25% of the length of the one or more outer interface terminals 21, 21'.

As in every embodiment of the interface module 20 described herein, the interface module 20 can be mountable to the housing 11 of the first current 10 section via fastening means 30, such as a screw 30 (as best seen in Fig. 10), preferably extending through a mounting hole 27 arranged on the interface module 20 (particularly arranged on the flat main part 26) between two outer interface terminals 21, 21' and between two inner interface sockets 22, 22' when mounted (as also seen in Fig. 10).

Fig. 9 further shows that the sides of each interface module 20 facing the first current section when mounted are substantially the same (at least this can be understood by the description herein). Moreover, the respective opposite sides of each interface module 20 are different. Thus, the interface modules allow to establish an electrical connection between at least two different inner vehicle terminals and the first current section. As can be seen, two inner interface sockets 22, 22' can be different in one or more of the following: a shape, such as a diameter, an arrangement, a protrusion length, mounting means for electrically connecting to respective inner vehicle terminals.

For instance, the diameters of the two inner interface sockets 22, 22' of the interface module 20b are greater than the respective diameters of the two inner interface sockets 22, 22' of the interface module 20b'. Further, the arrangement of the two inner interface sockets 22, 22' of the interface module 20a allows for an outlet angle of conductors (not shown in here) of 270° and the arrangement of the two inner interface sockets 22, 22' of the interface module 20b allows for an outlet angle of conductors of 90°. The two inner interface sockets 22, 22' of the interface modules 20 and 20' allows for screws 31, 31' from the bottom (as indicated in Fig. 7), wherein the two inner interface sockets 22, 22' of the remaining interface modules 20 allow for screws 32, 32' from the back (as indicated in Fig. 8).

**Fig. 10** shows an electrical connection system 1 according to an embodiment of the invention in three different assembly steps. Further, the mounting direction MD is indicated.

In all of the above embodiments and examples, the electrical connection system is configured to provide charging power of at least 100 kW, preferably at least 200 kW, more preferably at least 300 kW, most preferably at least 350 kW. Further, the DC section is configured to provide an electrical current of at least 300 A.

It is to be noted that the scope of protection is determined by the claims and is not limited by the embodiments and examples disclosed in the above figures.

### 6. List of reference signs

- 1, 1a, 1b, 1c, 1d, 1e, 1f, 1g: electrical connection system
- 2: core element
- 3: charging plug side
- 4: inner side
- 5: AC section
- 10: first current section (DC)
- 11: housing of the first current section
- 12: opening of the housing of the first current section
- 13: inner circumference of the opening
- 14, 14': recess of the first current section
- 15: ribs of the first current section
- 20: interface module
- 20': further interface module
- 20a: further interface module
- 20a': further interface module
- 20b: further interface module
- 20b': further interface module
- 21, 21': outer interface terminals
- 22, 22': inner interface sockets
- 23: fitting part
- 24: periphery of the interface module
- 25: slits
- 26: main plate of the interface module
- 27: mounting hole of the interface module
- 28, 28', 28", 28‴: locking member
- 29, 29': mounting holes of inner interface sockets
- 30: screw
- 31, 31': screws from bottom for mounting holes of inner interface sockets
- 32, 32': screws from the back for inner interface sockets
- 40: charging plug
- 50: vehicle
- 51, 51': inner vehicle terminal
- 52, 52': conductors
- 55, 55b, 55c, 55f, 55g: terminal housing
- 55f', 55g': terminal housing
- 56, 56', 56", 56‴: latching member of the terminal housing
- 60: battery
- 70: power source
- MD: mounting direction

## Claims

1. An electrical connection system (1, 1a, 1b, 1c, 1d, 1e, 1f, 1g) for charging a battery (60) of a vehicle (50), the system (1) comprising:
a core element (2) having a charging plug side (3) for receiving a charging plug (40) and an inner side (4) substantially opposite the charging plug side (3), the core element (2) comprising a first current section (10) with a housing (11); and
an interface module (20, 20', 20a, 20a', 20b, 20b') mountable to the inner side (4) of the core element (2) for electrically engaging with the first current section (10),
wherein the interface module (20) is configured to establish an electrical connection between one or more inner vehicle terminals (51, 51') and the first current section (10).

2. The electrical connection system (1) according to the preceding claim, wherein the interface module (20) has one or more outer interface terminals (21, 21') facing the first current section (10) of the core element (2) when mounted and one or more inner interface sockets (22, 22') for receiving one or more inner vehicle terminals (51, 51').

3. The electrical connection system (1) according to the preceding claim, wherein the one or more outer interface terminals (21, 21') are configured to engage with the first current section (10) and to protrude at least partially into one or more corresponding recesses (14, 14') of the first current section (10).

4. The electrical connection system (1) according to any one of claims 2 or 3, wherein the one or more inner interface sockets (22, 22') are protruding in an opposite direction than the one or more outer interface terminals (21, 21') by a length of at most 50%, preferably at most 40%, more preferably at most 30%, more preferably at most 35%, more preferably at most 30%, most preferably at most 25% of the length of the one or more outer interface terminals (21, 21').

5. The electrical connection system (1) according to any one of claims 2 to 4, wherein the one or more outer interface terminals (21, 21') and/or the one or more inner interface sockets (22, 22') have a substantially circular shape.

6. The electrical connection system (1) according to any one of the preceding claims, wherein the interface module (20) comprises a fitting part (23) for engaging with the housing (11) of the first current section (10),
optionally wherein the housing (11) defines an opening, and wherein the fitting part (23) at least partially extends into the opening (12) and preferably contacts at least partially an inner circumference (13) of the opening (12) when mounted.

7. The electrical connection system (1) according to the preceding claims, wherein the fitting part (23) has a thickness in a mounting direction (MD) of the interface module (20) of at most 40%, preferably at most 20%, more preferably at most 15%, most preferably at most 10% of its width or height perpendicular to the thickness.

8. The electrical connection system (1) according to any one of the preceding claims, wherein the interface module (20) comprises a plurality of locking members (28, 28', 28", 28‴) arranged on a periphery (24) of the interface module (20) for engaging with corresponding latching members (56) of a terminal housing (55) of the one or more inner vehicle terminals (51, 51').

9. The electrical connection system (1) according to any one of the preceding claims, wherein the interface module (20) comprises a plurality of slits (25) for receiving corresponding ribs (15) comprised by the first current section (10) when mounted.

10. The electrical connection system (1) according to any one of the preceding claims, wherein the interface module (20) is mountable to the housing (11) of the first current section (10) via fastening means (30), such as a screw, preferably extending through a mounting hole (27) arranged on the interface module (20) the between two outer interface terminals (21, 21') and between two inner interface sockets (22, 22') when mounted.

11. The electrical connection system (1) according to any one of the preceding claims, wherein the first current section (10) is a direct current (DC) section, configured to provide an electrical current of at least 300 A, preferably at least 400 A, more preferably at least 500 A, more preferably at least 600 A, more preferably at least 650 A, more preferably at least 800 A, more preferably at least 900 A, most preferably at least 1000 A.

12. The electrical connection system (1) according to any one of the preceding claims, wherein the core element (2) further comprises an alternating current (AC) section (5), wherein the core element (2) is part of a combined charging system (CCS), such as a CCS1 or CCS2,
wherein the electrical connection system (1) is configured to provide charging power of at least 100 kW, preferably at least 200 kW, more preferably at least 300 kW, more preferably at least 500 kW, more preferably at least 750 kW, more preferably at least 1000 kW, more preferably at least 1250 kW, most preferably at least 1500 kW.

13. A set comprising the electrical connection system (1) according to any one of the preceding claims, and further comprising:
at least one further interface module (20');
wherein the sides of the interface module (20) and of the further interface module (20') facing the first current section (10) when mounted are substantially the same and wherein the respective opposite sides of the interface module (20) and of the further interface module (20') are different, so as to allow to establish an electrical connection between at least two different inner vehicle terminals (51, 51') and the first current section (10).

14. The set according to the proceeding claim, wherein the one or more outer interface terminals (21, 21') of the interface module (20) and of the further interface module (20') are substantially the same and wherein the fitting part (23) of the interface module (20) and of the further interface module (20') are substantially the same,
wherein the one or more inner interface sockets (22, 22') of the interface module (20) and of the further interface module (20') are different in one or more of the following: a shape, such as a diameter, an arrangement, a protrusion length, mounting means (29, 29') for electrically connecting to respective inner vehicle terminals (51, 51').

15. Use of the set according to any one of the preceding set claims for connecting at least two different inner vehicle terminals (51, 51') to the first current section (10),
wherein, preferably, the inner vehicle terminals (51, 51') are different in one or more of the following: a shape, a size, a cross-section, an amount of current being transmitted and/or a configuration, such as shielding or cooling.
